# EUROPEAN PATENT APPLICATION

(11) **EP 4 421 142 A1**
(43) Date of publication of application: **28.08.2024**
(21) Application number: 23875918.7
(22) Date of filing: 02.06.2023
(51) Int. Cl.: C09J 133/08

(54) **BINDER AND PREPARATION METHOD THEREFOR, SEPARATOR, ELECTRODE SHEET, ELECTRODE ASSEMBLY, CELL, BATTERY, AND ELECTRIC DEVICE**

(30) Priority: 04.01.2023 CN 202310010277
(71) Applicant: Contemporary Amperex Technology Co., Limited, Ningde, Fujian 352100 (CN)
(72) Inventor: CHENG, Xiaonan, Ningde, Fujian 352100 (CN); HONG, Haiyi, Ningde, Fujian 352100 (CN); LI, Lei, Ningde, Fujian 352100 (CN); YANG, Jianrui, Ningde, Fujian 352100 (CN); WANG, Peng, Ningde, Fujian 352100 (CN); ZHENG, Yi, Ningde, Fujian 352100 (CN); SUN, Chengdong, Ningde, Fujian 352100 (CN)
(74) Representative: Gong, Jinping
(86) International application number: PCT/CN2023/098139
(87) International publication number: WO 2024/146062

(57) **Abstract**

This application discloses a binder and a preparation method thereof, a separator, an electrode plate, an electrode assembly, a battery cell, a battery, and an electric apparatus, and relates to the field of battery technologies. The binder includes a coating layer and a core disposed in the coating layer, where the coating layer includes a polyacrylate copolymer, and the core includes ceramic. The binder is applied onto the separator and used in the battery, providing strong adhesion. This enhances the pre-cold pressing adhesion force and hardness of the battery cell, and reduces electrochemical impedance, thus improving the cycling performance of the battery.

## Description

### CROSS-REFERENCE TO RELATED APPLICATIONS

This application claims priority to Chinese Patent Application No. 202310010277.1, filed on January 04, 2023 and entitled "BINDER AND PREPARATION METHOD THEREOF, SEPARATOR, ELECTRODE PLATE, ELECTRODE ASSEMBLY, BATTERY CELL, BATTERY, AND ELECTRIC APPARATUS", which is incorporated herein by reference in its entirety.

### TECHNICAL FIELD

This application relates to the field of battery technologies, and specifically, to a binder and a preparation method thereof, a separator, an electrode plate, an electrode assembly, a battery cell, a battery, and an electric apparatus.

### BACKGROUND

In recent years, with increasingly wide use of batteries, they have been widely used in energy storage power supply systems such as hydroelectric power plants, thermal power plants, wind power plants, and solar power plants, and many other fields including electric tools, electric bicycles, electric motorcycles, electric vehicles, military equipment, and aerospace. However, the battery binder used in the art has problems such as poor adhesion performance and low hardness, leading to ineffective adhesion between battery components, thus deteriorating the cycling performance of the battery and causing safety hazards.

### SUMMARY

This application is carried out in view of the preceding subject with an objective of providing good adhesion performance under a condition suitable for battery processing, thereby helping to improve the hardness and cycling performance of the battery.

To achieve the foregoing objective, this application provides a binder and a preparation method thereof, a separator, an electrode plate, an electrode assembly, a battery cell, a battery, and an electric apparatus.

According to a first aspect, this application provides a binder including a coating layer and a core disposed in the coating layer, where the coating layer includes a polyacrylate copolymer, and the core includes ceramic.

Thereby, in the technical solution of an embodiment of this application, the binder includes a coating layer and a core disposed in the coating layer, where the coating layer includes a polyacrylate copolymer, and the core includes ceramic. The binder is applied onto the separator and used in the battery, providing strong adhesion. This enhances the pre-cold pressing adhesion force and hardness of the battery cell, and reduces electrochemical impedance, thus improving the cycling performance of the battery.

In any embodiment, monomers of the polyacrylate copolymer include an acrylate monomer, an acrylonitrile monomer, and an acrylamide monomer.

Thereby, the acrylate monomer can enhance swelling resistance of the polymer and, as a flexible monomer chain segment in a molecular chain segment, can regulate the glass transition temperature of the polymer and improve toughness of the binder when applied, thereby facilitating good adhesion. The acrylonitrile monomer has strongly polar cyano groups that help to enhance ion conductivity. The acrylamide monomer regulates the molecular weight. The simultaneous presence of the foregoing three types of monomers allows for control of the molecular weight and glass transition temperature of the polymer, thereby improving the adhesion performance of the binder.

In any embodiment, a molar ratio of the acrylate monomer, acrylonitrile monomer, and acrylamide monomer is 1:(0.01-0.8):(0.01-0.15). With the molar ratio of the three types of monomers controlled in the foregoing range, the molecular weight and glass transition temperature of the polymer can be further controlled, thereby improving the adhesion performance of the binder.

In any embodiment, the acrylate monomer includes at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate. The acrylonitrile monomer includes at least one of acrylonitrile and methacrylonitrile. The acrylamide monomer includes at least one of acrylamide, N-methylolacrylamide, and N-butoxymethacrylamide. Experiments show that using the foregoing substances as the three types of monomers contributes to good lithium replenishment and adhesion effects, further enhancing the cycling performance and rate performance of lithium-ion batteries.

In any embodiment, a mass ratio of the polyacrylate copolymer to the ceramic is (20-50):(50-80). The foregoing ratio allows the binder to have good adhesion effect.

In any embodiment, the ceramic includes at least one of titanium dioxide, silicon oxide, boehmite, magnesium oxide, and aluminum oxide. The use of the foregoing ceramics increases the pre-cold pressing adhesion force and hardness of the battery cell and reduces electrochemical impedance, improving the cycling performance of the battery.

In any embodiment, a median particle size by volume Dᵥ50 of the ceramic is 0.01 µm-2 µm. The foregoing particle size allows the binder to have a strong adhesion force, improving the cycling performance of the battery.

In any embodiment, a median particle size by volume Dᵥ50 of the binder is 5 µm-100 µm, optionally 7 µm-8 µm. The foregoing particle size range allows good adhesion effect.

According to a second aspect, this application provides a preparation method of binder, including the following steps:
adding monomers of a polyacrylate copolymer into a solution containing an emulsifier, to obtain a pre-emulsion;
adding an initiator into the pre-emulsion for reaction, and adjusting a pH value to 7 to 8, to obtain a reaction solution; and
mixing the reaction solution and ceramic into uniformity and drying the mixture to obtain the binder.

Emulsion polymerization features fast polymerization speed and facilitates heat transfer and temperature control. Even after a high conversion rate is achieved, the viscosity of the emulsion polymer system remains low, and the dispersion system is stable, implementing easy control and continuous operations. Furthermore, a core-shell structured binder is prepared by mixing the polymer and ceramic particles for coating, improving the stability of the binder. The ceramic particles are bound by the polymer, increasing the pre-cold pressing adhesion force and improving the kinetic performance of lithium-ion batteries.

In any embodiments, the reaction is conducted at 20°C to 90°C, optionally 75°C to 85°C; and the reaction is conducted for 20 min to 40 min. Experiments show that under the foregoing reaction temperature and time, the reaction is more thorough with fewer side reactions.

The drying includes spray-drying. The spray-drying is a method of applying a systematic technique to material drying. In the drying chamber, the dilute material is atomized and, upon contact with hot air, the moisture rapidly evaporates, resulting in the dried products. This method allows the solution and emulsion to be directly dried into powdered or granular products, eliminating processes such as evaporation and pulverization. The drying process is extremely fast, allowing direct drying for producing powder. It is easy to change the drying conditions and adjust product quality standards. Due to the extremely fast evaporation, the requirements for selecting equipment and material are not strict. The negative pressure in the drying chamber guarantees sanitary conditions during production and prevents dust from spreading in the workshop, enhancing product purity.

In any embodiment, monomers of the polyacrylate copolymer include an acrylate monomer, an acrylonitrile monomer, and an acrylamide monomer.

Thereby, the acrylate monomer can enhance swelling resistance of the polymer and, as a flexible monomer chain segment in a molecular chain segment, can regulate the glass transition temperature of the polymer and improve toughness of the binder when applied, thereby facilitating good adhesion. The acrylonitrile monomer has strongly polar cyano groups that help to enhance ion conductivity. The acrylamide monomer regulates the molecular weight. The simultaneous presence of the foregoing three types of monomers allows for control of the molecular weight and glass transition temperature of the polymer, thereby improving the adhesion performance of the binder.

In any embodiment, a molar ratio of the acrylate monomer, acrylonitrile monomer, and acrylamide monomer is 1:(0.01-0.8):(0.01-0.15), optionally 1:(0.05-0.7):(0.05-0.12). With the molar ratio of the three types of monomers controlled in the foregoing range, the molecular weight and glass transition temperature of the polymer can be further controlled, thereby improving the adhesion performance of the binder.

In any embodiment, the acrylate monomer includes at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate. The acrylonitrile monomer includes at least one of acrylonitrile and methacrylonitrile. The acrylamide monomer includes at least one of acrylamide, N-methylolacrylamide, and N-butoxymethacrylamide. Experiments show that using the foregoing substances as the three types of monomers contributes to good adhesion effects, further enhancing the cycling performance and rate performance of lithium-ion batteries.

In any embodiment, a mass ratio of the polyacrylate copolymer to the ceramic is (20-50):(50-80). The foregoing ratio allows the binder to have good adhesion effect.

In any embodiment, the ceramic includes at least one of titanium dioxide, silicon oxide, boehmite, magnesium oxide, and aluminum oxide. The use of the foregoing ceramics increases the pre-cold pressing adhesion force and hardness of the battery cell and reduces electrochemical impedance, improving the cycling performance of the battery.

In any embodiment, a median particle size by volume Dᵥ50 of the ceramic is 0.01 µm-2 µm. The foregoing particle size allows the binder to have a strong adhesion force, improving the cycling performance of the battery.

In any embodiment, a median particle size by volume Dᵥ50 of the binder is 5 µm-100 µm, optionally 7 µm-8 µm. The foregoing particle size range allows good adhesion effect.

According to a third aspect, an embodiment of this application provides a separator including the binder according to the embodiment of the first aspect of this application or a binder prepared using the preparation method of binder according to the embodiment of the second aspect.

According to a fourth aspect, an embodiment of this application provides an electrode plate including the binder according to the embodiment of the first aspect of this application or a binder prepared using the preparation method of binder according to the embodiment of the second aspect.

According to a fifth aspect, an embodiment of this application provides an electrode assembly including at least one of the binder according to the embodiment of the first aspect of this application, a binder prepared using the preparation method of binder according to the embodiment of the second aspect, the separator according to the embodiment of the third aspect, and the electrode plate according to the embodiment of the fourth aspect.

According to a sixth aspect, an embodiment of this application provides a battery cell including the electrode assembly according to the embodiment of the fifth aspect of this application.

According to a seventh aspect, an embodiment of this application provides a battery including the battery cell according to the embodiment of the sixth aspect of this application.

According to an eighth aspect, an embodiment of this application provides an electric apparatus including the battery cell according to the embodiment of the sixth aspect of this application or the battery according to the embodiment of the seventh aspect.

### BRIEF DESCRIPTION OF DRAWINGS

To describe the technical solutions in the embodiments of the present invention or in the art more clearly, the following briefly describes the accompanying drawings required for describing the embodiments or the prior art. Apparently, the accompanying drawings in the following description show merely some of the embodiments of the present invention, and persons of ordinary skill in the art may still derive other drawings from these accompanying drawings without creative efforts.
FIG. 1 is a schematic diagram of a battery cell according to an embodiment of this application;
FIG. 2 is an exploded view of the battery cell according to the embodiment of this application in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application in FIG. 4;
FIG. 6 is a schematic diagram of an electric apparatus using a secondary battery as a power source according to an embodiment of this application; and
FIG. 7 is a SEM diagram of a binder according to Example 1 of this application.

Reference numerals in the accompanying drawings described as follows:
1. battery pack; 2. upper box body; 3. lower box body; 4. battery module; 5. battery cell; 51. housing; 52. electrode assembly; and 53. top cover assembly.

The realization of the objective, functional features, and advantages of the present invention are further described with reference to the embodiments and the accompanying drawings.

### DESCRIPTION OF EMBODIMENTS

The following specifically discloses embodiments of a binder, a separator, an electrode plate, an electrode assembly, a battery cell, a battery, and an electric apparatus with appropriate reference to detailed descriptions of accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are provided as 1 and 2, and maximum values of the range are provided as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed sequentially or randomly, and preferably, are performed sequentially. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

The secondary battery includes a positive electrode plate, a negative electrode plate, a separator, and an electrolyte inside. The manufacturing process and the performance optimization of the battery cell require a certain adhesion force between the separator and the positive electrode plate as well the negative electrode plate. This is achieved by coating the surface of the separator with an adhesive coating material to make an adhesive separator. In the prior art, the materials applied to the surface of the separator are classified into fluorinated polymers and non-fluorinated polymers.

In recent years, with increasingly wide use of batteries, they have been widely used in energy storage power supply systems such as hydroelectric power plants, thermal power plants, wind power plants, and solar power plants, and many other fields including electric tools, electric bicycles, electric motorcycles, electric vehicles, military equipment, and aerospace. However, the battery binder used in the art has problems such as poor adhesion performance and low hardness, leading to ineffective adhesion between battery components, thus deteriorating the cycling performance of the battery and causing safety hazards.

In view of this, researchers have made a series of improvements and provided a method for coating ceramic particles with polymer, along with its application. Specifically, the ceramic particles are dispersed in an organic solvent with a coupling agent added, to form a first dispersion liquid. The first polymer and the second polymer are dissolved in an organic solvent to form a second dispersion liquid. The first dispersion liquid is reacted with the second dispersion liquid to form a third dispersion liquid. The first dispersion agent, organic solvent, and water are mixed to form a base liquid. The water solution of the third dispersion liquid and the water solution of the second dispersion agent are added dropwise into the base liquid simultaneously. The water-to-oil ratio in the water solutions of the third dispersion liquid and the second dispersion agent is the same as the water-to-oil ratio in the base liquid. The first polymer is at least one of polyvinylidene fluoride and polyvinylidene-fluoride hexafluoropropylene copolymer. The second polymer is at least one of polyacrylonitrile, polyacrylic acid, and polyacrylate copolymer.

Polyvinylidene fluoride, as the most commonly used binder, has been widely used in separators, but currently is getting increasingly expensive in market due to the tight supply. Applying the polyvinylidene fluoride polymer to surface of the lithium battery separator can partially resolve the problem of separator shrinkage under high temperatures. After wound, the battery cell is cold pressed. However, conventional polyvinylidene fluoride is a homopolymer with a crystallinity of about 50%, which results in inadequate adhesion with the positive and negative electrode plates, leading to cell opening problems.

In view of this, the inventors have conducted numerous experiments and discovered that organic polymers obtained by polymerizing polymerizable monomers containing specific functional groups in a specified weight ratio exhibit good adhesion performance. In addition, these polymers are able to fully exert their adhesion performance under battery operating conditions, thereby helping to improve the cycling performance of secondary batteries. The use of ceramic particles can improve the hardness of the battery cell. Furthermore, when the binder is applied to the separator, the resistance of the separator is reduced and ion conductivity of the separator is increased, thereby improving the battery performance.

Based on this, this application provides a binder and a preparation method thereof, a separator, an electrode plate, an electrode assembly, a battery cell, a battery, and an electric apparatus.

This application provides a binder including a coating layer and a core disposed in the coating layer, where the coating layer includes a polyacrylate copolymer, and the core includes ceramic.

Thereby, in the technical solution of an embodiment of this application, the binder includes a coating layer and a core disposed in the coating layer, where the coating layer includes a polyacrylate copolymer, and the core includes ceramic. The binder is applied onto the separator and used in the battery, providing strong adhesion. This enhances the pre-cold pressing adhesion force and hardness of the battery cell, and reduces electrochemical impedance, thus improving the cycling performance of the battery.

The polyacrylate copolymer is a general term for polymers produced through copolymerization reaction using acrylate as the raw material. Acrylate , with reactive double bonds, is prone to self-polymerization and copolymerization. One or more types of copolymerization monomers may be used, which may be other acrylic compounds or other unsaturated compounds with double bonds, such as styrene, acrylonitrile, vinyl acetate, and chloroethylene.

The ceramic is a type of inorganic non-metallic material that is formed and sintered at high temperature using natural or synthetic compounds. The ceramic has advantages such as high melting point, high hardness, excellent wear resistance, and oxidation resistance. The ceramic can be produced by sintering natural raw materials such as feldspar, clay, and quartz. They are typical silicate materials, primarily composed of silicon, aluminum, and oxygen. These three elements account for 90% of the total elements in the earth crust. Ordinary ceramics feature abundant sources, low costs, and mature processing techniques. In terms of performance characteristics and applications, the ceramics of this sort can be further classified into daily ceramic, architectural ceramic, electrical insulating ceramic, chemical ceramic, and the like.

In any embodiment, monomers of the polyacrylate copolymer include an acrylate monomer, an acrylonitrile monomer, and an acrylamide monomer.

The acrylate monomer is a monomer containing methyl acrylate, with the following constitutional formula: 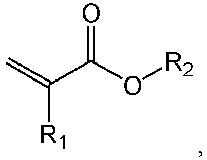 where R1 includes a hydrogen atom or an alkyl group containing 1 to 6 carbon atoms, R2 includes a substituted or unsubstituted alkyl group containing 1 to 15 carbon atoms, or cycloalkyl or isobutenyl group containing 3 to 6 carbon atoms, and in the case of being substituted, a substituent group includes a hydroxyl group or an alkyl group containing 1 to 6 carbon atoms.

The acrylonitrile monomer is a monomer containing an acrylonitrile group, with the following constitutional formula: 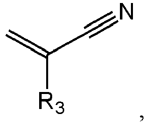 where R3 includes a hydrogen atom or an alkyl group containing 1 to 6 carbon atoms.

The acrylamide monomer is a monomer containing an acrylamide group, with the following constitutional formula: 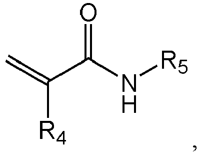 where R4 includes a hydrogen atom or an alkyl group containing 1 to 6 carbon atoms, and R5 includes a hydrogen atom, a hydroxy-substituted alkyl group containing 1 to 6 carbon atoms, or alkoxy group containing 1 to 6 carbon atoms.

Thereby, the acrylate monomer can enhance swelling resistance of the polymer and, as a flexible monomer chain segment in a molecular chain segment, can regulate the glass transition temperature of the polymer and improve toughness of the binder when applied, thereby facilitating good adhesion. The acrylonitrile monomer has strongly polar cyano groups that help to enhance ion conductivity. The acrylamide monomer regulates the molecular weight. The simultaneous presence of the foregoing three types of monomers allows for control of the molecular weight and glass transition temperature of the polymer, thereby improving the adhesion performance of the binder.

It can be understood that this application does not impose any restrictions on the arrangement of monomers in polyacrylate copolymer. The acrylate monomer, acrylonitrile monomer, and acrylamide monomer may be arranged sequentially or in another order. The foregoing manners are all within the protection scope of this application.

In any embodiment, a molar ratio of the acrylate monomer, acrylonitrile monomer, and acrylamide monomer is 1:(0.01-0.8):(0.01-0.15), optionally 1:(0.05-0.7):(0.05-0.12). The molar ratio may be, for example, but is not limited to, any one of 1:0.01:0.01, 1:0.01:0.15, 1:0.8:0.01, 1:0.8:0.15, 1:0.4:0.01, 1:0.4:0.15, 1:0.01:0.08, and 1:0.8:0.08, or any range between any two of the above values. With the molar ratio of the three types of monomers controlled in the foregoing range, the molecular weight and glass transition temperature of the polymer can be further controlled, thereby improving the adhesion performance of the binder.

In any embodiment, the acrylate monomer includes at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate. The acrylonitrile monomer includes at least one of acrylonitrile and methacrylonitrile. The acrylamide monomer includes at least one of acrylamide, N-methylolacrylamide, and N-butoxymethacrylamide. Experiments show that using the foregoing substances as the three types of monomers contributes to good adhesion effects, further enhancing the cycling performance and rate performance of lithium-ion batteries.

In any embodiment, a mass ratio of the polyacrylate copolymer to the ceramic is (20-50):(50-80). The mass ratio may be, for example, but is not limited to, any one of 20:50, 20:80, 20:65, 50:50, 50:80, and 50:65, or any range between any two of the above values. The foregoing ratio allows the binder to have good adhesion effect.

In any embodiment, the ceramic includes at least one of titanium dioxide, silicon oxide, boehmite, magnesium oxide, and aluminum oxide. The use of the foregoing ceramics increases the pre-cold pressing adhesion force and hardness of the battery cell and reduces electrochemical impedance, improving the cycling performance of the battery.

In any embodiment, a median particle size by volume Dᵥ50 of the ceramic is 0.01 µm-2 µm. The median particle size by volume may be, for example, but is not limited to, any one of 0.01 µm, 0.3 µm, 0.5 µm, 1 µm, 1.5 µm, 1.8 µm, and 2 µm, or any range between any two of the above values. The foregoing particle size allows the binder to have a strong adhesion force, improving the cycling performance of the battery.

In any embodiment, a median particle size by volume Dᵥ50 of the binder is 5 µm-100 µm, optionally 7 µm-8 µm. The median particle size by volume may be, for example, but is not limited to, any one of 5 µm, 7 µm, 8 µm, 10 µm, 30 µm, 50 µm, 80 µm, 100 µm, or any range between any two of the above values. The foregoing particle size range allows good adhesion effect.

In this embodiment of this application, the corresponding particle size at which the cumulative particle size distribution percentage of the binder particles reaches 50% is Dᵥ50. The test method is as follows:

Refer to the standard GB/T 19077-2016/ISO 13320: 2009 particle size distribution laser diffraction method. Use a laser particle size analyzer (Malvern 3000, MasterSizer 3000) to perform the test, with a helium-neon red light source as the main light source. Take a clean small beaker and add 1 g of the sample under test, add a drop of surfactant, add 20 ml of deionized water (to obtain a sample concentration that ensures a shading degree of 8%-12%), and perform sonication at 53 KHz/120 W for 5 min to ensure that the sample is fully dispersed. Turn on the laser particle size analyzer, clean the optical path system, and perform automatic background test. Stir the sonicated solution under test to ensure its uniform dispersion, place it in the sample pool as required, and start measuring the particle size. The measurement results can be read from the instrument.

According to a second aspect, this application provides a preparation method of binder, including the following steps:
adding monomers of a polyacrylate copolymer into a solution containing an emulsifier, to obtain a pre-emulsion;
adding an initiator into the pre-emulsion for reaction, and adjusting a pH value to 7 to 8, to obtain a reaction solution; and
mixing the reaction solution and ceramic into uniformity and drying the mixture to obtain the binder.

Emulsifiers are a type of organic compound that causes immiscible liquids to form a stable emulsion. The emulsifiers are all substances with surface activity, able to reduce the interfacial tension between liquids, making it easy for immiscible liquids to emulsify. During emulsification, the dispersed phases are uniformly distributed in the continuous phase in the form of tiny liquid droplets (with a diameter ranging from 0.1 micrometers to several tens of micrometers). The emulsifier forms a thin film or double layers on the surface of these droplets, preventing their coalescence and maintaining the stability of the emulsion. In this embodiment of this application, the emulsifier used is sodium dodecyl sulfonate.

The pre-emulsion is a solution formed by emulsifying the monomers of the polyacrylate copolymer, allowing the monomers to form a stable emulsion.

Initiators, also known as free radical initiators, are a type of compound that is easily thermally decomposed into free radicals (that is, primary radicals). They can be used to initiate free radical polymerization and copolymerization reactions of olefinic and diene monomers or used for the crosslinking and curing of unsaturated polyesters and polymer crosslinking reactions. In this embodiment of this application, the initiator used is potassium persulfate.

The numerical value of hydrogen ion concentration exponent is commonly referred to as "pH value". The pH value represents the acidity or alkalinity level of a solution, that is, the negative logarithm of the concentration of the hydrogen ions contained. The pH value can be determined using pH test paper or pH meter.

Emulsion polymerization features fast polymerization speed and facilitates heat transfer and temperature control. Even after a high conversion rate is achieved, the viscosity of the emulsion polymer system remains low, and the dispersion system is stable, implementing easy control and continuous operations. Furthermore, a core-shell structured binder is prepared by mixing the polymer and ceramic particles for coating, improving the stability of the binder. The ceramic particles are bound by the polymer, increasing the pre-cold pressing adhesion force and improving the kinetic performance of lithium-ion batteries.

Persons skilled in the art can understand that in the foregoing method of specific embodiments, the order in which the steps are presented does not imply strict execution sequence or impose any limitations on the implementation process. The specific execution sequence of each step should be determined based on its functionality and the possible inherent logic.

In any embodiment, the reaction temperature is 20°C to 90°C, optionally 75°C to 85°C, and may be, for example, but is not limited to any one of 20°C, 30°C, 40°C, 50°C, 60°C, 70°C, 75°C, 80°C, 85°C, and 90°C, or any range between any two of the above values. The reaction time is 20 min to 40 min, and may be, for example, but is not limited to any one of 20 min, 22 min, 25 min, 28 min, 30 min, 33 min, 35 min, 37 min, and 40 min, or any range between any two of the above values. Experiments show that under the foregoing reaction temperature and time, the reaction is more thorough with fewer side reactions.

It can be understood that the limitations on the reaction temperature and time can be satisfied individually or simultaneously. In this embodiment of this application, when both are satisfied, the reaction is more thorough with fewer side reactions.

The drying includes spray-drying. The spray-drying is a method of applying a systematic technique to material drying. In the drying chamber, the dilute material is atomized and, upon contact with hot air, the moisture rapidly evaporates, resulting in the dried products. This method allows the solution and emulsion to be directly dried into powdered or granular products, eliminating processes such as evaporation and pulverization. The drying process is extremely fast, allowing direct drying for producing powder. It is easy to change the drying conditions and adjust product quality standards. Due to the extremely fast evaporation, the requirements for selecting equipment and material are not strict. The negative pressure in the drying chamber guarantees sanitary conditions during production and prevents dust from spreading in the workshop, enhancing product purity.

In any embodiment, monomers of the polyacrylate copolymer include an acrylate monomer, an acrylonitrile monomer, and an acrylamide monomer.

Thereby, the acrylate monomer can enhance swelling resistance of the polymer and, as a flexible monomer chain segment in a molecular chain segment, can regulate the glass transition temperature of the polymer and improve toughness of the binder when applied, thereby facilitating good adhesion. The acrylonitrile monomer has strongly polar cyano groups that help to enhance ion conductivity. The acrylamide monomer regulates the molecular weight. The simultaneous presence of the foregoing three types of monomers allows for control of the molecular weight and glass transition temperature of the polymer, thereby improving the adhesion performance of the binder.

In any embodiment, a molar ratio of the acrylate monomer, acrylonitrile monomer, and acrylamide monomer is 1:(0.01-0.8):(0.01-0.15), optionally 1:(0.05-0.7):(0.05-0.12).

The molar ratio of monomers is the ratio about mole quantities of monomers. It may be, for example, but is not limited to, any one of 1:0.01:0.01, 1:0.01:0.15, 1:0.8:0.01, 1:0.8:0.15, 1:0.4:0.01, 1:0.4:0.15, 1:0.01:0.08, and 1:0.8:0.08, or any range between any two of the above values. With the molar ratio of the three types of monomers controlled in the foregoing range, the molecular weight and glass transition temperature of the polymer can be further controlled, thereby improving the adhesion performance of the binder.

In any embodiment, the acrylate monomer includes at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate. The acrylonitrile monomer includes at least one of acrylonitrile and methacrylonitrile. The acrylamide monomer includes at least one of acrylamide, N-methylolacrylamide, and N-butoxymethacrylamide. Experiments show that using the foregoing substances as the three types of monomers contributes to good lithium replenishment and adhesion effects, further enhancing the cycling performance and rate performance of lithium-ion batteries.

In any embodiment, a mass ratio of the polyacrylate copolymer to the ceramic is (20-50):(50-80). The mass ratio may be, for example, but is not limited to, any one of 20:50, 20:80, 20:65, 50:50, 50:80, and 50:65, or any range between any two of the above values. The foregoing ratio allows the binder to have good adhesion effect.

In any embodiment, the ceramic includes at least one of titanium dioxide, silicon oxide, boehmite, magnesium oxide, and aluminum oxide. The use of the foregoing ceramics increases the pre-cold pressing adhesion force and hardness of the battery cell and reduces electrochemical impedance, improving the cycling performance of the battery.

In any embodiment, a median particle size by volume Dᵥ50 of the ceramic is 0.01 µm-2 µm. The median particle size by volume may be, for example, but is not limited to, any one of 0.01 µm, 0.3 µm, 0.5 µm, 1 µm, 1.5 µm, 1.8 µm, and 2 µm, or any range between any two of the above values. The foregoing particle size allows the binder to have a strong adhesion force, improving the cycling performance of the battery.

In any embodiment, a median particle size by volume Dᵥ50 of the binder is 5 µm-100 µm, optionally 7 µm-8 µm. The median particle size by volume may be, for example, but is not limited to, any one of 5 µm, 7 µm, 8 µm, 10 µm, 30 µm, 50 µm, 80 µm, 100 µm, or any range between any two of the above values. The foregoing particle size range allows good adhesion effect.

In this embodiment of this application, the corresponding particle size at which the cumulative particle size distribution percentage of the binder particles reaches 50% is Dᵥ50. The test method is as follows:

Refer to the standard GB/T 19077-2016/ISO 13320: 2009 particle size distribution laser diffraction method. Use a laser particle size analyzer (Malvern 3000, MasterSizer 3000) to perform the test, with a helium-neon red light source as the main light source. Take a clean small beaker and add 1 g of the sample under test, add a drop of surfactant, add 20 ml of deionized water (to obtain a sample concentration that ensures a shading degree of 8%-12%), and perform sonication at 53 KHz/120 W for 5 min to ensure that the sample is fully dispersed. Turn on the laser particle size analyzer, clean the optical path system, and perform automatic background test. Stir the sonicated solution under test to ensure its uniform dispersion, place it in the sample pool as required, and start measuring the particle size. The measurement results can be read from the instrument.

According to a third aspect, an embodiment of this application provides a separator including the binder according to the embodiment of the first aspect of this application or a binder prepared using the preparation method of binder according to the embodiment of the second aspect.

When the binder according to the first aspect of this application is applied to the separator, the resistance of the separator can be reduced and the ion conductivity of the separator can be improved, thereby improving the battery performance and achieving effective lithium replenishment.

The separator substrate is not limited to any particular type in this application, and may be any well-known porous separator substrate with good chemical stability and mechanical stability.

In some embodiments, the separator substrate may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

The separator described in this application may be prepared using conventional methods for separators in the art. For example, the binder described according to the first aspect of this application may be dissolved in an organic solvent to obtain a slurry; the slurry is then applied onto the material of the separator; subsequently, the organic solvent is removed by drying to obtain the separator described in this application.

In some embodiments, the binder is applied onto the separator substrate at a density of 0.3-1.0 g/m², and further 0.3-0.8 g/m².

According to a fourth aspect, an embodiment of this application provides an electrode plate including the binder according to the embodiment of the first aspect of this application or a binder prepared using the preparation method of binder according to the embodiment of the second aspect.

The electrode plate includes the binder according to the embodiment of the first aspect of this application or a binder prepared using the preparation method of binder according to the embodiment of the second aspect. The electrode plate may be prepared using a method commonly used in the art.

It should be noted that the electrode plate described in this application may be a positive electrode plate or a negative electrode plate.

The positive electrode plate includes a positive electrode current collector and a positive electrode film layer disposed on at least one surface of the positive electrode current collector, where the positive electrode film layer includes the binder according to the first aspect of this application

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a well-known positive electrode active material used for batteries in the art. For example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM₃₃₃ for short), LiNi_{0.5}Co_{0.3}Mn_{0.2}O₂ (NCM₅₂₃ for short), LiNi_{0.5}Co_{0.25}Mn_{0.25}O₂ (NCM₂₁₁ for short), LiNi_{0.6}Co_{0.2}Mn_{0.2}O₂ (NCM₆₂₂ for short), and LiNi_{0.8}Co_{0.1}Mn_{0.1}O₂ (NCMsn for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, the positive electrode plate may be prepared in the following manners: the constituents used for preparing the positive electrode plate, for example, the positive electrode active material, the conductive agent, the binder according to the embodiment of the first aspect of this application, and any other constituent, are dissolved in a solvent (for example, N-methylpyrrolidone) to form a positive electrode slurry; the positive electrode slurry is applied onto the positive electrode current collector, and processes such as drying and cold pressing are performed to obtain the positive electrode plate.

In some embodiments, the percentage of the binder according to the embodiment of the first aspect of this application in the positive electrode plate is 1%-3%, based on the total weight of the positive electrode film layer.

Similarly, the electrode plate described in this application may alternatively be a negative electrode plate. The negative electrode plate includes a negative electrode current collector and a negative electrode film layer disposed on at least one surface of the negative electrode current collector, where the negative electrode film layer includes the binder according to the first aspect of this application.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, a copper foil may be used as metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for a battery in the art. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active materials for batteries instead. One type of these negative electrode active materials may be used alone, or two or more of them may be used in combination.

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other promoters such as a thickener (for example, sodium carboxymethyl cellulose (CMC-Na)).

In some embodiments, the negative electrode plate may be prepared in the following manner: the constituents used for preparing a negative electrode plate, for example, the negative electrode active material, the conductive agent, the binder according to the embodiment of the first aspect of this application, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

In some embodiments, the percentage of the binder according to the embodiment of the first aspect of this application in the negative electrode plate is 1%-3%, based on the total weight of the negative electrode film layer.

According to a fifth aspect, an embodiment of this application provides an electrode assembly including at least one of the binder according to the embodiment of the first aspect of this application, a binder prepared using the preparation method of binder according to the embodiment of the second aspect, the separator according to the embodiment of the third aspect, and the electrode plate according to the embodiment of the fourth aspect. The electrode assembly proposed in this application has all the beneficial effects of the foregoing binder. Details are not described herein.

According to a sixth aspect, an embodiment of this application provides a battery cell including the electrode assembly according to the embodiment of the fifth aspect of this application.

Normally, the battery cell includes a positive electrode plate, a negative electrode plate, an electrolyte, and a separator. In a charge and discharge process of the battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

The battery cell may be prepared using methods commonly used in the art. For example, the positive electrode plate, the negative electrode plate, and the separator may be made into an electrode assembly through winding or lamination, and then the electrode assembly is injected with electrolyte and sealed to obtain the battery cell.

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is liquid. The electrolyte includes an electrolytic salt and a solvent.

In some embodiments, the electrolyte salt may be selected from at least one of lithium hexafluorophosphate, lithium tetrafluoroborate, lithium perchlorate, lithium hexafluoroborate, lithium difluorosulfonphthalimide, lithium bis-trifluoromethanesulfonimide, lithium triflate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

In some embodiments, the positive electrode plate, the negative electrode plate, and the separator may be made into an electrode assembly through winding or lamination.

In some embodiments, the battery cell may include an outer package. The outer package may be used for packaging the electrode assembly and the electrolyte.

In some embodiments, the outer package of the battery cell may be a hard shell, for example, a hard plastic shell, an aluminum shell, or a steel shell. The outer package of the battery cell may alternatively be a soft pack, for example, a soft pouch. A material of the soft pack may be plastic. As the plastic, polypropylene, polybutylene terephthalate, polybutylene succinate, and the like may be listed.

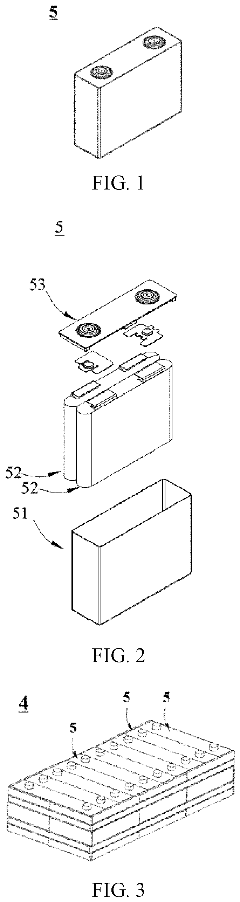

This application does not impose any special limitations on the shape of the battery cell, and the battery cell may be cylindrical, rectangular, or of any other shapes. For example, FIG. 1 shows a battery cell 5 of a rectangular structure as an example.

In some embodiments, referring to FIG. 2, the outer package may include a housing 51 and a cover plate 53. The housing 51 may include a base plate and a side plate connected onto the base plate, where the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. Electrolyte infiltrates into the electrode assembly 52. The battery cell 5 may include one or more electrode assemblies 52, and persons skilled in the art may make choices according to actual requirements.

According to a seventh aspect, an embodiment of this application provides a battery including the battery cell according to the embodiment of the sixth aspect of this application.

The battery may be in the form of a battery module or a battery pack, and one or more battery cells may be contained in the battery module. The specific number may be selected by those skilled in the art based on the application and capacity of the battery module.

FIG. 3 shows a battery module 4 as an example. Referring to FIG. 3, in the battery module 4, a plurality of battery cells 5 may be sequentially arranged in a length direction of the battery module 4. Certainly, the batteries may alternatively be arranged in any other manners. Further, the plurality of battery cells 5 may be fastened through fasteners.

In any embodiment, the battery module 4 may further include a housing with an accommodating space, and the plurality of battery cells 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

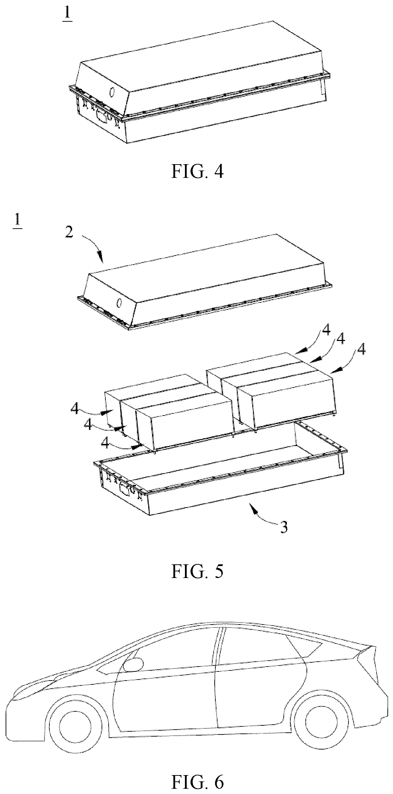

FIGs. 4 and 5 show a battery pack 1 as an example. Referring to FIGs. 4 and 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

According to an eighth aspect, an embodiment of this application provides an electric apparatus including the battery cell according to the embodiment of the sixth aspect of this application or the battery according to the embodiment of the seventh aspect. The battery cell and the battery may be used as a power source of the electric apparatus, or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 6 shows an electric apparatus as an example. The electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. Such apparatus is generally required to be light and thin and may use a secondary battery as its power source.

The technical solutions of the present invention are further described in detail in the following in combination with the specific embodiments and accompanying drawings. It should be understood that the following embodiments are only intended to explain the present invention and are not intended to limit the present invention.

Related parameters of binders in examples 1 to 18 and comparative examples 1 to 3 are shown below in Table 1.

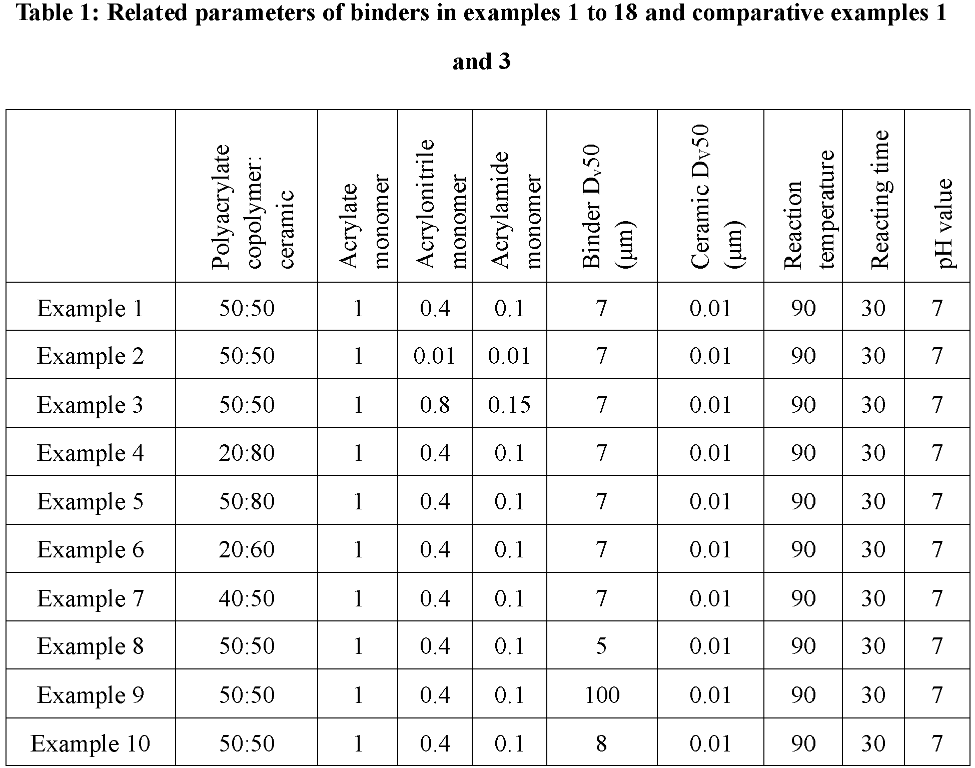

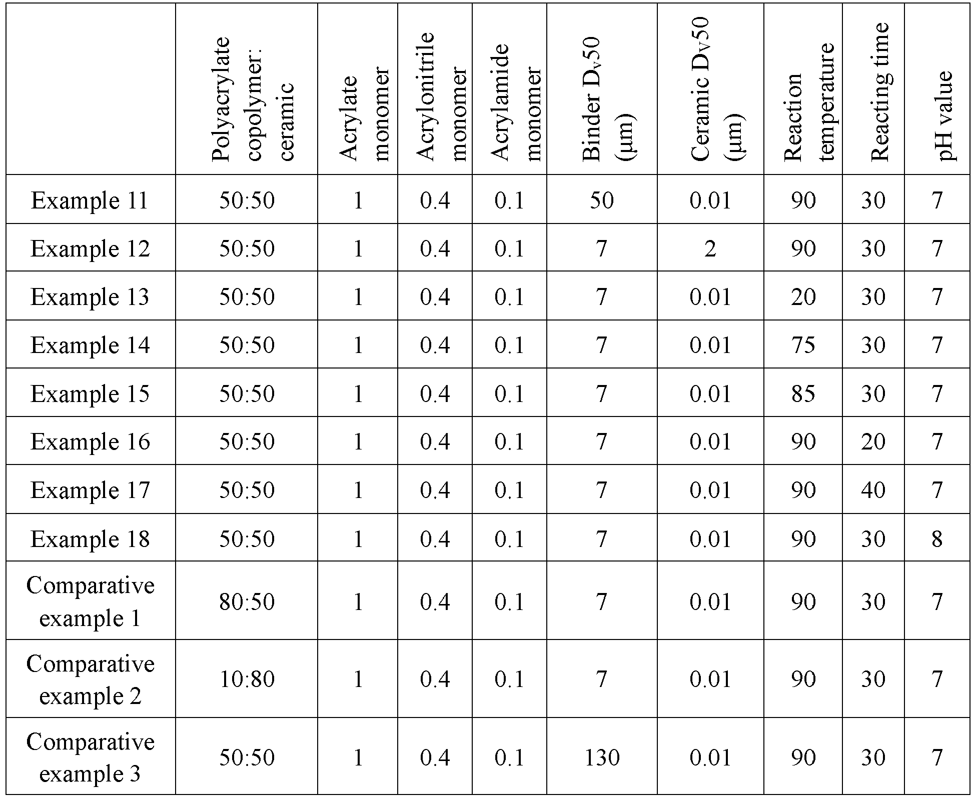

### Example 1

### 1. Preparation of binder

(1) 150 g of deionized water and 3.6 g of sodium dodecyl sulfonate were separately added into a 500 mL three-neck flask and stirred thoroughly for 15 min for emulsification. Next, 75.24 g of methyl acrylate, 18.55 g of acrylonitrile, and 6.21 g of acrylamide were sequentially added into the flask at a molar ratio of 1:0.4:0.1, followed by a through stir for 60 min, to obtain a pre-emulsion of monomers, which was taken out for later use.
(2) 100 mL of deionized water and 0.15 g of sodium dodecyl benzene sulfonate were added into a 500 mL three-neck flask, heated to 80°C, and emulsified at a stirring speed of 2000 r/min for 15 min to ensure thorough emulsification. Then, the pre-emulsion prepared in the foregoing step and an initiator solution (a solution produced by dissolving an initiator, 0.2 g of potassium persulfate, in 30 g of deionized water) were added dropwise slowly. After the dropwise addition is complete, the temperature was raised to 90°C and kept in 0.5 h for reaction, and then was lowered to 40°C. After a pH value was adjusted to 7 using ammonium hydroxide, the stirring was stopped, and the mixture was filtered and discharged to obtain a polymer emulsion.
(3) The foregoing emulsion containing 100 g of polymer active ingredient was dispersed together with 100 g of Boehmite ceramic particles with Dᵥ50 of 0.01 µm at a high speed for 60 min, and after thorough mixing, spray-drying was conducted to obtain a core-shell structured binder.

### 2. Preparation of separator

A commercially available PP-PE copolymer microporous membrane with a thickness of 20 µm and an average pore size of 80 nm (obtained from Zhaogao Electronic Technology Company, Model 20) was used as the substrate. The binder prepared above and deionized water were stirred and mixed well to obtain a slurry (with a solid content of 20%). The slurry was evenly applied onto two surfaces of the substrate at a coating density of 1.0 g/m2, and a solution was removed through drying, to obtain the separator.

### 3. Preparation of positive electrode plate

Polyvinylidene fluoride (PVDF), lithium iron phosphate (LFP), conductive carbon black, and N-methylpyrrolidone (NMP) were stirred and mixed well at a mass ratio of 1.2:58.38:0.42:40, to prepare a positive electrode slurry. The positive electrode slurry with a loading amount of 200 g/m² was evenly applied onto a positive-electrode current-collector aluminum foil, followed by drying, cold pressing, and slitting, to obtain the positive electrode plate.

### 4. Preparation of negative electrode plate

Artificial graphite, acetylene black as a conductive agent, butadiene styrene rubber (SBR) as a binder, and sodium carboxymethylcellulose (CMC-Na) as a thickener were added to deionized water at a mass ratio of 96.2:1.0:1.6:1.2 and then stirred and mixed well to prepare a negative electrode slurry (with a solid content of 63%). The negative electrode slurry with a loading amount of 98 g/m2 was applied onto a negative-electrode current-collector aluminum foil, followed by drying, cold pressing, and slitting, to obtain the negative electrode plate.

### 5. Preparation of electrolyte

Ethylene carbonate (EC), ethyl methyl carbonate (EMC), and diethyl carbonate (DEC) were mixed in a volume ratio of 1:1:1 at 25°C, and then LiPF6 was dissolved in the above mixed solvent to obtain an electrolyte, where the concentration of LiPF6 was 1 mol/L.

### (6) Preparation of secondary battery

The foregoing positive electrode plate, separator, and negative electrode plate were stacked in order and wound and pre-pressed for formation (during which the separator was bonded to the electrode plates), to obtain an electrode assembly. The electrode assembly was put into an outer package, the electrolyte prepared above was added, followed by processes such as sealing, standing, formation, and aging to obtain the secondary battery.

The preparations of the binders, separators, positive electrode plates, negative electrode plates, electrolytes, and secondary batteries in examples 2 to 18 and comparative examples 1 and 2 followed the same procedures as example 1, except that the preparations were performed according to the parameters in Table 1.

A mass ratio of the polyacrylate copolymer to the ceramic in the binder in comparative example 1 was beyond the range of (20-50):(50-80), and a particle size of the binder in comparative example 2 exceeded 100 µm.

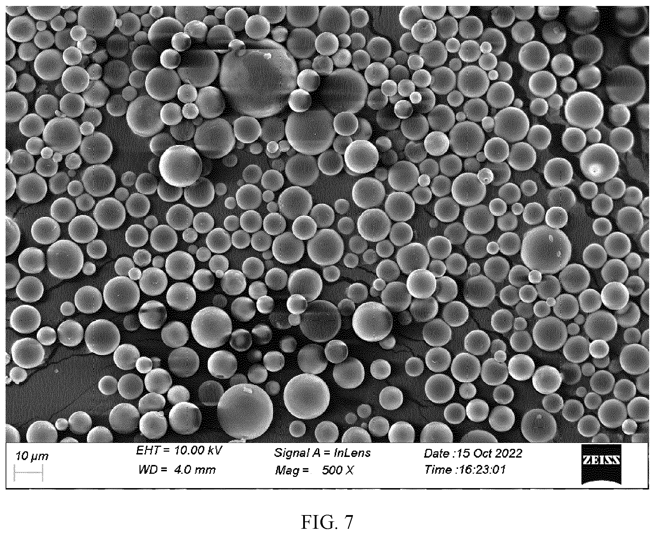

The resulting binder in example 1 was subjected to scanning electron microscopy, and it can be seen from FIG. 7 that the binder produced in example 1 was spherical overall, with a particle size of about 8 µm.

The following tests were conducted on the products in examples 1 to 17 and comparative examples 1 and 2:

### 1. Pre-cold pressing adhesion force

The electrode plates and the separator in each of the examples and comparative examples were stacked together and then placed on a cold press machine. The parameters for the hot press machine were set as follows: temperature was 25°C, pressure was 10 t, and time was 30s. A sample of adhered separator/electrode plate was obtained under the action of pressure. The sample of adhered separator/electrode plate was cut into rectangular sample strips of 150 mm × 20 mm. The electrode plate side of the rectangular sample strip was attached to a steel plate with double-sided tape, and the separator was separated from the electrode plate by 2 cm along a length direction at one end of the rectangular strip, to prepare the test sample.

The steel plate was kept horizontal and fixed with a lower clamp of a universal testing machine (Model CTM2100 from Xie Qiang Instrument Manufacturing (Shanghai) Co., Ltd.), and the peeled end of the separator was fixed with an upper clamp of the universal testing machine and connected to a tensile machine. The test conditions were set to tensile rate of 20 mm/min and a horizontal pull of 10 cm. After the tension becomes stable, the tension value was recorded, and the adhesion force between the separator and the electrode plate was obtained based on a ratio of the tension value to width of the sample.

### 2. Cycling performance of lithium-ion battery

A LAND battery testing system was used to charge, at 25°C, the batteries prepared in examples and comparative examples to 4.3 V at a constant current of 1/3C and then charge them to a current of 0.05C at a constant voltage of 4.3 V Next, after left standing for 5 min, the batteries were discharged to 2.8 V at 1/3C, with the discharge capacity recorded as the initial capacity C0. The above steps were repeated on each of the batteries, and the discharge capacity Cn of the battery was recorded after the n-th cycle. The capacity retention rate of the battery after each cycle was calculated according to the following formula: Pn=(Cn/C0)× 100%. Then, the difference in cycling performance can be represented by the capacity retention rate of the battery after a specified number of cycles.

### 3: Hardness of electrode assembly

The electrode assembles in examples and comparative examples were placed on a platform with two ends horizontal and the 12-cm wide central hollow part fixed. The electrode assembles were laid flat naturally, and the deviations from the center positions of the electrode assembles from the horizontal reference line were measured, so as to evaluate the hardness of the electrode assembles.

### 4. EIS data

The CHI660D electrochemical workstation from Shanghai Chenhua Company was used to apply a sinusoidal voltage signal with a frequency of W1 at small amplitude to the secondary batteries in the examples and comparative examples. The system generated a sinusoidal current response with a frequency of W2. The variation in the ratio of the excitation voltage to the response current was the impedance spectrum of the electrochemical system. In AC impedance testing, the test frequency range was 10 mHz to 100 kHz, with an amplitude of 5 mV. Through the testing, information about the real and imaginary parts of impedance at different frequencies can be obtained.

The test results are shown in Table 2 below.

**Table 2 Performance test of lithium-ion batteries of examples 1 to 18 and comparative examples 1 and 2**

| | Data of adhesion force between separator and electrode plate (N/m) | Hardness of electrode assembly (mm) | EIS data (Ω) | Cycling performance of battery (%) | Rate performance of battery (%) |
|---|---|---|---|---|---|
| Example 1 | 8.25 | 0 | 1.201 | 98.1 | 97.8 |
| Example 2 | 7.26 | 0 | 1.411 | 96.6 | 96.4 |
| Example 3 | 7.57 | 0 | 1.337 | 96.9 | 96.8 |
| Example 4 | 4.36 | 0 | 1.746 | 94.5 | 95.0 |
| Example 5 | 5.59 | 0 | 1.569 | 95.8 | 95.5 |
| Example 6 | 4.78 | 0 | 1.684 | 95.3 | 95.4 |
| Example 7 | 6.85 | 0 | 1.454 | 96.3 | 96.2 |
| Example 8 | 7.48 | 0 | 1.389 | 96.7 | 96.5 |
| Example 9 | 6.37 | 0 | 1.503 | 96.2 | 95.8 |
| Example 10 | 8.22 | 0 | 1.212 | 98 | 97.6 |
| Example 11 | 7.62 | 0 | 1.302 | 97.2 | 97.2 |
| Example 12 | 7.57 | 0 | 1.336 | 96.9 | 97.0 |
| Example 13 | 4.56 | 0 | 1.721 | 94.8 | 95.2 |
| Example 14 | 7.86 | 0 | 1.263 | 97.8 | 97.5 |
| Example 15 | 7.92 | 0 | 1.248 | 97.8 | 97.5 |
| Example 16 | 7.51 | 0 | 1.364 | 96.7 | 96.7 |
| Example 17 | 7.75 | 0 | 1.275 | 97.5 | 97.3 |
| Example 18 | 7.67 | 0 | 1.287 | 97.4 | 97.2 |
| Comparative example 1 | 4.31 | 3 | 1.785 | 92.9 | 94.1 |
| Comparative example 2 | 3.25 | 12 | 1.875 | 92.0 | 93.6 |
| Comparative example 3 | 3.78 | 8 | 1.832 | 92.8 | 94.0 |

Through the comparison between the comparative examples and examples, specifically from examples of 1 to 17, it can be seen from Table 2 that the binder including the polyacrylate copolymer exhibits good adhesion performance, able to fully exert the adhesion performance of the binder under battery operating conditions. This helps to improve the kinetic and safety performance of the battery, thus further increasing the cycling capacity retention rate of the battery. In addition, the core includes the ceramic. The binder is applied onto the separator and used in the battery, providing strong adhesion. This enhances the pre-cold pressing adhesion force and hardness of the battery cell, and reduces electrochemical impedance, thus improving the cycling performance of the battery.

A mass ratio of the polyacrylate copolymer to the ceramic in the binder in comparative example 1 is beyond the range of (20-50):(50-80), and a particle size of the binder in comparative example 2 exceeds 100 µm. It can be seen from comparative example 1 that when the ratio is not within the specified range, the binder adhesion force and JR hardness as well as the impedance, cycling performance, and rate performance of the battery are all poor. In addition, it can be seen from comparative example 2 that when the particle size of the binder is excessively large, the cycling performance and rate performance of the binder are both poor. The excessively large particle size leads to a decrease in adhesion force, which in turn affects the cycling and rate performances.

In summary, the binder provided in this application is applied onto the separator and used in the battery, providing strong bonding. This enhances the pre-cold pressing adhesion force and hardness of the battery cell, and reduces electrochemical impedance, thus improving the cycling performance of the battery.

The foregoing descriptions are merely preferred embodiments of the present invention, which are not therefore limitations on the patent scope of the present invention. Persons skilled in the art understand that the present invention may have various modifications and variations. Any modification, equivalent replacement, or improvement made without departing from the spirit and principle of the present invention shall fall within the patent protection scope of the present invention.

## Claims

1. A binder, **characterized by** comprising a coating layer and a core disposed in the coating layer, wherein the coating layer comprises a polyacrylate copolymer, and the core comprises ceramic.

2. The binder according to claim 1, **characterized in that** monomers of the polyacrylate copolymer comprise an acrylate monomer, an acrylonitrile monomer, and an acrylamide monomer.

3. The binder according to claim 2, **characterized in that** the acrylate monomer comprises at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate; and/or
the acrylonitrile monomer comprises at least one of acrylonitrile and methacrylonitrile; and/or
the acrylamide monomer comprises at least one of acrylamide, N-methylolacrylamide, and N-butoxymethacrylamide; and/or
a molar ratio of the acrylate monomer, acrylonitrile monomer, and acrylamide monomer is 1:(0.01-0.8):(0.01-0.15), optionally 1:(0.05-0.7):(0.05-0.12).

4. The binder according to any one of claims 1 to 3, **characterized in that** a mass ratio of the polyacrylate copolymer to the ceramic is (20-50):(50-80).

5. The binder according to any one of claims 1 to 3, **characterized in that** the ceramic comprises at least one of titanium dioxide, silicon oxide, boehmite, magnesium oxide, and aluminum oxide; and/or
a median particle size by volume Dᵥ50 of the ceramic is 0.01 µm to 2 µm.

6. The binder according to any one of claims 1 to 3, **characterized in that** a median particle size by volume Dᵥ50 of the binder is 5 µm to 100 µm, optionally, 7 µm to 8 µm.

7. A preparation method of binder, **characterized by** comprising the following steps:
adding monomers of a polyacrylate copolymer into a solution containing an emulsifier, to obtain a pre-emulsion;
adding an initiator into the pre-emulsion for reaction, and adjusting a pH value to 7 to 8, to obtain a reaction solution; and
mixing the reaction solution and ceramic into uniformity and drying the mixture to obtain the binder.

8. The preparation method of binder according to claim 7, **characterized in that** the reaction is conducted at 20°C to 90°C, optionally, 75°C to 85°C; and/or
the reaction is conducted for 20 min to 40 min; and/or
the drying comprises spray-drying.

9. The preparation method of binder according to claim 7, **characterized in that** monomers of the polyacrylate copolymer comprise an acrylate monomer, an acrylonitrile monomer, and an acrylamide monomer.

10. The preparation method of binder according to claim 9, **characterized in that** the acrylate monomer comprises at least one of methyl acrylate, ethyl acrylate, n-butyl acrylate, isobutyl acrylate, sec-butyl acrylate, tert-butyl acrylate, n-propyl acrylate, cyclohexyl acrylate, lauryl acrylate, 2-ethylhexyl acrylate, 2-hydroxyethyl acrylate, 2-hydroxypropyl acrylate, methyl methacrylate, ethyl methacrylate, n-butyl methacrylate, 2-ethylhexyl methacrylate, isobornyl methacrylate, lauryl methacrylate, 2-hydroxyethyl methacrylate, and 2-hydroxypropyl methacrylate; and/or
the acrylonitrile monomer comprises at least one of acrylonitrile and methacrylonitrile; and/or
the acrylamide monomer comprises at least one of acrylamide, N-methylolacrylamide, and N-butoxymethacrylamide; and/or
a molar ratio of the acrylate monomer, acrylonitrile monomer, and acrylamide monomer is 1:(0.01-0.8):(0.01-0.15), optionally 1:(0.05-0.7):(0.05-0.12).

11. The preparation method of binder according to any one of claims 7 to 9, **characterized in that** a mass ratio of the polyacrylate copolymer to the ceramic is (20-50):(50-80).

12. The preparation method of binder according to any one of claims 7 to 9, **characterized in that** the ceramic comprises at least one of titanium dioxide, silicon oxide, boehmite, magnesium oxide, and aluminum oxide; and/or
a median particle size by volume Dᵥ50 of the ceramic is 0.01 µm to 2 µm.

13. The preparation method of binder according to any one of claims 7 to 9, **characterized in that** a median particle size by volume Dᵥ50 of the binder is 5 µm to 100 µm, optionally, 7 µm to 8 µm.

14. A separator, **characterized by** comprising the binder according to any one of claims 1 to 6 or a binder prepared using the preparation method of binder according to any one of claims 7 to 13.

15. An electrode plate, **characterized by** comprising the binder according to any one of claims 1 to 6 or a binder prepared using the preparation method of binder according to any one of claims 7 to 13.

16. An electrode assembly, **characterized by** comprising at least one of the binder according to any one of claims 1 to 6 a binder prepared using the preparation method of binder according to any one of claims 7 to 13, the separator according to claim 14, and the electrode plate according to claim 15.

17. A battery cell, **characterized by** comprising the electrode assembly according to claim 16.

18. A battery, **characterized by** comprising the battery cell according to claim 17.

19. An electric apparatus, **characterized by** comprising the battery cell according to claim 17 or the battery according to claim 18.
